# EUROPÄISCHE PATENTANMELDUNG

(11) **EP 3 246 232 A1**
(43) Veröffentlichungstag der Anmeldung: **22.11.2017**
(21) Anmeldenummer: 17000660.5
(22) Anmeldetag: 18.04.2017
(51) Int. Cl.: B62D 55/24

(54) **GUMMIKETTE**

(30) Priorität: 17.05.2016 DE 202016003121 U
(71) Anmelder: GUMA-TECH GmbH, 51688 Wipperfürth (DE)
(72) Erfinder: Mao, Haifei, 51643 Gummersbach (DE)
(74) Vertreter: Draudt, Axel Hermann Christian

(57) **Zusammenfassung**

Eine Gummikette (10) für Land- und Baumaschinen, mit formschlüssig nach Innen weisenden angetriebenen Gummizähnen (12), die mittig in Längsrichtung der Gummikette (10) mit gleichen Abständen zueinander angeordnet und im Betriebszustand zwischen Innenseiten von Rollen (14) aufgenommen und mittels eines Antriebsrades (16), das Antriebsstäbe aufweist, bewegbar sind, **dadurch gekennzeichnet,** dass jeweils zwei nebeneinander angeordnete Gummizähne (12) mittels Stahlbleche verbunden sind, die mit bestimmtem Abstand zur Oberflächenform der Gummizähne (12) innerhalb derer angeordnet sind.

## Beschreibung

Die vorliegende Erfindung betrifft eine Gummikette für Land- und Baumaschinen, mit formschlüssig nach Innen weisenden angetriebenen Gummizähnen, die mittig in Längsrichtung der Gummikette mit gleichen Abständen zueinander angeordnet und im Betriebszustand zwischen Innenseiten von Rollen aufgenommen und mittels eines Antriebsrades, das Antriebsstäbe aufweist, bewegbar sind.

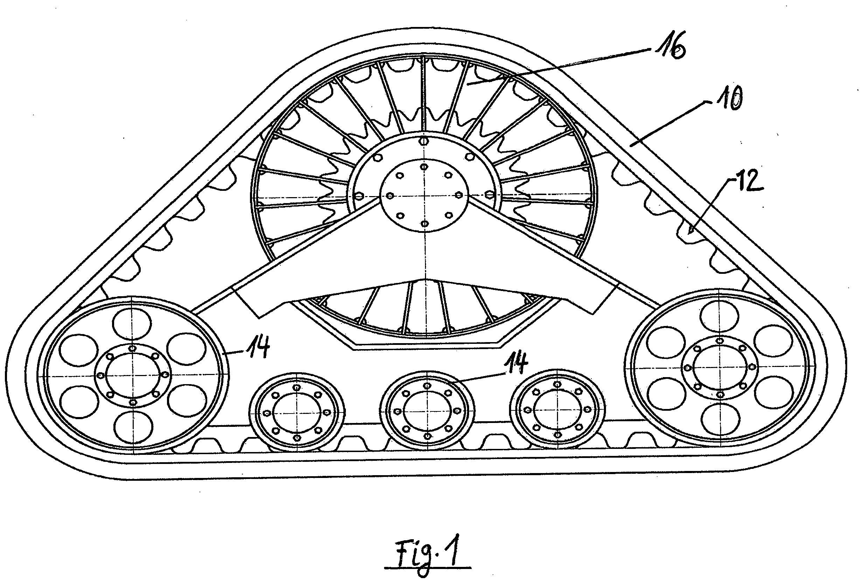

Derartige Gummiketten sind allgemein bekannt und werden auf in Fig. 1 gezeigten Antriebseinheiten aufgezogen.

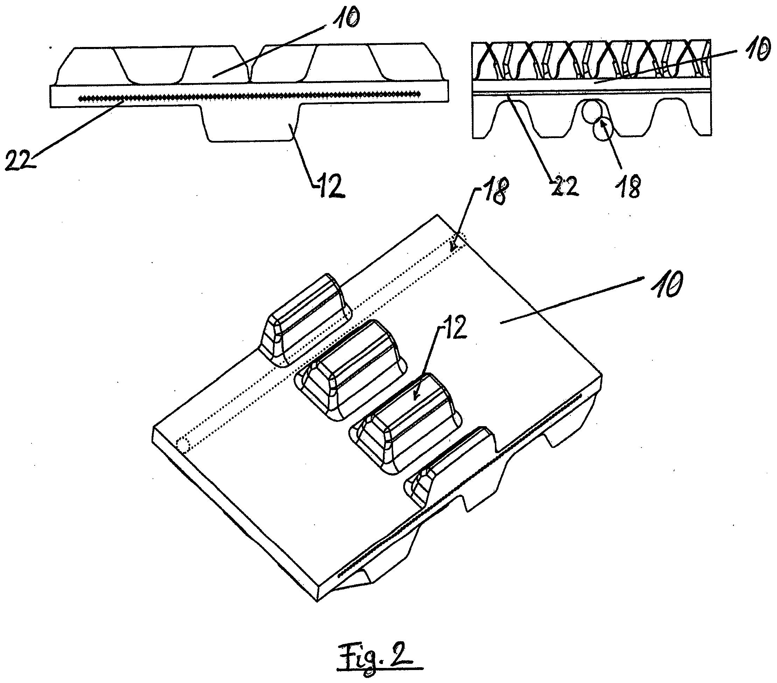

Die Fig. 1 und 2 werden nunmehr für die Beschreibung des Standes der Technik herangezogen. Da sich aus den Fig.1 und 2 die Erfindung noch nicht ergibt, werden auch für diese beiden Fig.1 und 2 die gleichen Bezugszeichen verwandt wie später bei den übrigen Figuren, an denen dann das Erfindungswesentliche beschrieben werden wird.

Wie bereits oben angegeben, werden die Gummizähne (12) zur Bewegung der gesamten Gummikette (10) mittels des Antriebsrades (16) bezüglich der Bildfläche entweder nach links oder nach rechts bewegt.

Diese Bewegung wird induziert, indem das Antriebsrad (16) mit Antriebsstäben (18) in die Zwischenbereiche zwischen den einzelnen Zähnen eintaucht (12) (siehe Fig.2), und sich dann nach einem gemeinsamen gewissen Umlauf aus dieser Lücke löst.

Dabei treten an den Zahnflanken sehr große Kräfte auf, die links am Anfang des Flankenbereichs am größten sind. Aber auch an der Zahnspitze bei dem Flankenende tritt noch eine sehr große Kraft auf. Ebenfalls auch auf dem Flankenbeginn links.

Diese großen Belastungen, führen zu heftigen Biegebewegungen insbesondere des Ansatzes des Gummizahns (12). Dadurch ergibt sich oftmals schon nach 400 Betriebsstunden bei den Zahnböden eine Beschädigung, die spätestens beim nächsten Durchlauf durch das Antriebsrad (16) dazu führt, dass der Gummizahn (12) abbricht. Das hat zur Folge, dass die gesamte Gummikette für einen einwandfreiem Arbeitsverlauf nicht mehr geeignet ist und ausgewechselt werden muss.

Der Erfindung liegt daher die Aufgabe zugrunde, eine Gummikette der eingangs genannten Art anzugeben, die mit technisch einfachen Mitteln eine wesentlich höhere Betriebszeit ermöglicht.

Diese Aufgabe wird bei einer Gummikette der eingangs genannten Art erfindungsgemäß dadurch gelöst, dass jeweils zwei nebeneinander angeordnete Gummizähne mittels Stahlblechen verbunden sind, die mit bestimmtem Abstand zur Oberflächenform der Gummizähne innerhalb derer angeordnet sind.

Der Kern der Erfindung besteht nicht nur darin, die Flankenseiten für eine größere Kraftaufnahme zu verstärken, sondern auch noch darin, die einwirkende Kraft noch teilweise auf den Nebenzahn zu verteilen.

Damit die Gummikette insbesondere die Gummizähne nicht zu starr oder zu fest werden und keine ausreichende Elastizität aufweisen, ist es vorteilhaft, wenn die Stahlbleche an den Spitzen der Gummizähne nicht miteinander verbunden sind. Dadurch ist sichergestellt, dass lediglich immer nur zwei Zähne fest mit dem Stahlblech verbunden sind.

Eine weitere Ausführungsform der Erfindung sieht vor, dass die Stahlbleche einvulkanisiert sind. Dadurch erhöht sich die Verbindungskraft zwischen Stahlblech und Gummianteil und somit eine bessere Kraftübertragung.

Besonders vorteilhaft ist es, wenn das Stahlblech eine hohe Festigkeit und Elastizität aufweist.

Die oben angegebene Aufgabe wird weiterhin gelöst durch eine Gummikette für Land- und Baumaschinen, mit formschlüssig nach Innen weisenden angetriebenen Gummizähnen, die mittig in Längsrichtung der Gummikette mit gleichen Abständen zueinander angeordnet und im Betriebszustand zwischen Innenseiten von Rollen aufgenommen und mittels eines Antriebsrades, das Antriebsstäbe aufweist, bewegbar sind, so dass jeweils zwei nebeneinander angeordnete Gummizähne mittels Stahlcordbänder verbunden sind, die mit bestimmtem Abstand zur Oberflächenform der Gummizähne innerhalb derer angeordnet sind.

Der Unterschied zwischen dem Hauptanspruch und dem Nebenanspruch besteht lediglich darin, dass anstelle der Stahlbleche Stahlcordbänder verwandt werden.

Dies führt zu denselben Vorteilen wie vorstehende Ausführungsbeispiele mit Stahlblechen, selbstverständlich sie die vorstehenden Ausführungsbeispiele selbstverständlich auch für mit Stahlcordbänder versehene Gummiketten gemäß den Unteransprüchen 2 bis 4 des Hauptanspruchs 1 geeignet.

Da sich lediglich der eine Bestandteil Stahlblech in Stahlcordband ändert, wird auf die weitere Beschreibung der zu dieser Lösungsform gehörenden Unteransprüche 6 bis 8 verzichtet.

Weitere Vorteile und Merkmale der Erfindung ergeben sich aus der folgenden Beschreibung von Ausführungsbeispielen sowie aus den Figuren, auf die Bezug genommen wird. Es zeigen:
- Fig.1: eine Seitenansicht auf eine Antriebseinheit mit einer Gummikette, die Gummizähne zum Antrieb aufweist;
- Fig.2: zwei Querschnittsansichten und eine Perspektivansicht der in Fig.1 gezeigten Gummikette, nicht gemäß der Erfindung; und
- Fig.3: eine der Fig.2 ähnliche Querschnitte und Perspektivansichten mit verstärkten Gummizähnen.

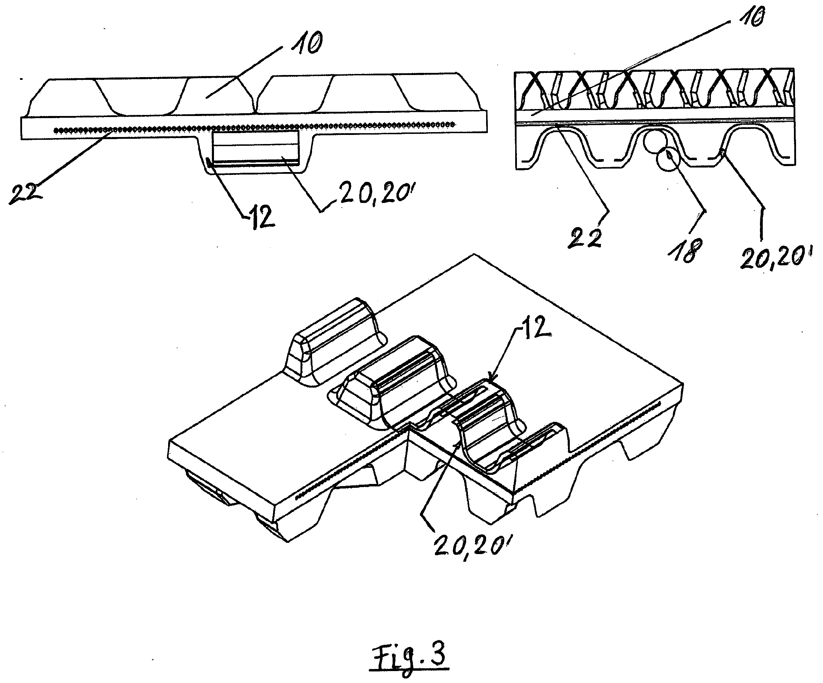

Anhand der Fig. 3 werden nunmehr zwei Ausführungsbeispiele der Erfindung näher dargestellt. Dabei bedeuten gleiche Bezugszeichen, gleiche oder ähnliche Merkmale, soweit nichts anderes ausgesagt ist.

Die Fig.1 ist lediglich eine Seitenansicht einer Antriebseinheit mit einer Gummikette 10, die nach Innen gerichtete Antriebszähne 12 aufweist. Die Gummikette 10 wird mittels eines Antriebsrades 16 dadurch in Bewegung gesetzt, dass bei der Rotation dieses Antriebsrads diese Antriebsstäbe 18 in den Zwischenraum zwischen zwei Zähnen mit mehreren Antriebsstäben 18 eingreift und je nach Drehrichtung nach rechts oder nach links weiterbefördert.

In diesem Fall ist die Antriebseinheit derart ausgeführt, dass das Antriebsrad 16 oberhalb von Rollen 14 angeordnet ist, wobei die äußeren Rollen 14 sogenannte Umlenkrollen sind.

Diese Rollen 14 sind derart ausgebildet, dass sie, ähnlich einer Garnspule, zwischen ihren Außenrändern eine Aufnahmevertiefung für die Gummizähne 12 aufweist.

Dies ist noch einmal anschaulich in Fig.2 dargestellt, wobei in diesem Falle auch noch ein Antriebsstab 18 schematisch in der Perspektivdarstellung und im Querschnitt in der Querschnittsansicht in Längsrichtung der Kette dargestellt ist.

Aus der Fig.2 ergibt sich, dass die Antriebsstäbe 18 in dem Fall, in dem der dazugehörige Querschnitt auf der Blattebene nach rechts bewegt werden soll, in den Zahnzwischenraum eintauchen und dann entlang der Flanken bis zur Spitze bzw. Flankenende die Gummikette 10 antreibt und dann diesen Zahnzwischenraum verlässt. Insbesondere bei dem ersten Berühren der anzutreibenden Zahnflanke tritt eine Kraftverteilung auf, wodurch die an der Flanke angeordneten Bereiche sehr viel stärker versetzt werden.

In der rechten Seite sind die Kraftverteilungen wesentlich regelmäßiger und auch sehr viel geringer.

Anhand der zwei Querschnitte und der einen teilweise geschnittenen Perspektivansicht der Fig.3 wird nunmehr die erfinderische Kraftanleitungshilfe näher beschrieben. Wie sich insbesondere aus dem in Fig.3 oben rechts dargestellten Querschnitt ergibt, werden immer zwei Gummizähne 12 von Spitze zu Spitze innerhalb des Gummis von einem Stahlblech 20 oder einem Stahlcordband 20' verbunden.

An den spitzen Bereichen der Gummizähne 12 ist keine Verbindung mit dem folgenden Verstärkungsbereich, Stahlblech 20 oder Stahlcordband 20', aus Elastizitätsgründen vorhanden.

Des weiteren ist aus der Fig.3 ein Verstärkungsband 22 erkennbar, das aber mit dieser Erfindung nichts zu tun hat.

Aufgrund der Stahlbleche 20 oder Stahlcordbänder 20' wird nunmehr die Kraft, die die Antriebsstäbe 18 auf die Zahnflanken ausüben, besser verteilt, so dass nicht mehr diese Kraftspitzen auftreten, sondern die Kräfte auf größere Flächen verteilt werden.

Dadurch ist sichergestellt, dass die Gummizähne 12 eine wesentliche längere Betriebszeit erreichen, da die Stahlbleche 20 oder Stahlcordbänder 20' die Kraft auf eine größere Fläche innerhalb des Gummizahns 12 verteilt. Da, wie aus Fig.3 oben rechts entnehmbar, immer zwei nebeneinander liegende Zähne miteinander verbunden sind und diese Zähne auch mit anderen Nachbarzähnen mit den Stahlblechen 20 oder Stahlcordbändern 20' verbunden sind, bleibt insgesamt eine Elastizität der Gummikette erhalten.

Es ist selbstverständlich, dass die Stahlbleche 20 bzw. die Stahlcordbänder 20' auch eine gewissen Elastizität und vor allen Dingen eine hohe Festigkeit aufweisen.

### Bezugszeichenliste:

- 10: Gummikette
- 12: Gummizahn
- 14: Rolle
- 16: Antriebsrad
- 18: Antriebsstab
- 20: Stahlblech
- 20': Stahlcordband
- 22: Verstärkungsband

## Patentansprüche

1. Gummikette (10) für Land- und Baumaschinen, mit formschlüssig nach Innen weisenden angetriebenen Gummizähnen (12), die mittig in Längsrichtung der Gummikette (10) mit gleichen Abständen zueinander angeordnet und im Betriebszustand zwischen Innenseiten von Rollen (14) aufgenommen und mittels eines Antriebsrades (16), das Antriebsstäbe (18) aufweist, bewegbar sind, **dadurch gekennzeichnet, dass** jeweils zwei nebeneinander angeordnete Gummizähne (12) mittels Stahlbleche (20) verbunden sind, die mit bestimmtem Abstand zur Oberflächenform der Gummizähne (12) innerhalb derer angeordnet sind.

2. Gummikette (10) nach Anspruch 1, **dadurch gekennzeichnet, dass** die Stahlbleche (20) in den Spitzen der Gummizähnen (12) nicht miteinander verbunden sind.

3. Gummikette (10) nach Anspruch 1 oder 2, **dadurch gekennzeichnet, dass** die Stahlbleche (20) einvulkanisiert sind.

4. Gummikette (10) nach einem der Ansprüche 1 bis 3, **dadurch gekennzeichnet, dass** das Stahlblech (20) eine hohe Festigkeit und Elastizität aufweist.

5. Gummikette (10) für Land- und Baumaschinen, mit formschlüssig nach Innen weisenden angetriebenen Gummizähnen (12), die mittig in Längsrichtung der Gummikette (10) mit gleichen Abständen zueinander angeordnet sind und im Betriebszustand zwischen Innenseiten von Rollen (14) aufgenommen und mittels eines Antriebsrades (16), das Antriebsstäbe (18) aufweist, bewegbar, **dadurch gekennzeichnet, dass** jeweils zwei nebeneinander angeordnete Gummizähne (12) mittels Stahlcordbänder (20') verbunden sind, die mit bestimmtem Abstand zur Oberflächenform der Gummizähne (12) innerhalb derer angeordnet sind.

6. Gummikette (10) nach Anspruch 1, **dadurch gekennzeichnet, dass** die Stahlcordbänder (20') in den Spitzen der Gummizähnen (12) nicht miteinander verbunden sind.

7. Gummikette (10) nach Anspruch 1 oder 2, **dadurch gekennzeichnet, dass** die Stahlcordbänder (20') einvulkanisiert sind.

8. Gummikette (10) nach einem der Ansprüche 1 bis 3, **dadurch gekennzeichnet, dass** das Stahlcordband (20') eine hohe Festigkeit und Elastizität aufweist.
